Europäisches Patentamt

(19) European Patent Office

Office européen des brevets

(11) Publication number: **0 076 418**
**B1**

(12) **EUROPEAN PATENT SPECIFICATION**

(45) Date of publication of patent specification: **03.06.87**

(21) Application number: **82108635.2**

(22) Date of filing: **18.09.82**

(51) Int. Cl.⁴: **B 29 C 65/08**, B 65 D 17/40,
B 65 D 41/58, B 65 D 8/18

(54) **Method for manufacturing sealed plastics containers, in particular flacons, vials, and/or the like, and containers obtained thereby.**

(30) Priority: **02.10.81 IT 2428781**
**02.10.81 IT 2311281 u**

(43) Date of publication of application:
**13.04.83 Bulletin 83/15**

(45) Publication of the grant of the patent:
**03.06.87 Bulletin 87/23**

(84) Designated Contracting States:
**AT BE CH DE FR GB LI LU NL SE**

(56) References cited:
**FR-A-1 181 592**
**FR-A-1 347 236**
**GB-A-2 067 128**
**US-A-3 175 939**

(73) Proprietor: **Montalbetti, Ermenegildo**
**Via Cavour, 3**
**I-21040 Caidate di Sumirago Varese (IT)**

(72) Inventor: **Montalbetti, Ermenegildo**
**Via Cavour, 3**
**I-21040 Caidate di Sumirago Varese (IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

This invention relates to a method for manufacturing sealed plastics flacons in particular flacons intended to contain medicinal liquids.

From FR—A—1 181 592 a method as defined in the pre-characterizing clause of the appended sole claim is known for manufacturing sealed plastics flacons containing a liquid.

When the flacon is intended to contain a medicinal liquid, the problem of contamination of the medicinal liquid during the processing stages arises.

It is well known in the art that some medicinal liquids are very sensitive to external conditions to which they are exposed and may be deteriorated by the action of such external conditions. The thermofusion manufacturing stage of the here contemplated method may engender such external conditions susceptible to deteriorate the medicinal liquid contained in the flacon.

The aim of this invention is to solve the above said problem. Such aim is achieved by the features of the characterizing part of the appended sole claim.

An embodiment of the invention is described hereinafter with reference to the drawing in which:

Fig. 1 is an exploded view of component parts of a plastic flacon of the shown embodiment of the invention;

Figures 2 to 4 are schematical views illustrating the steps of the method for manufacturing sealed flacons according to the invention;

Figures 5 and 6 are schematical views showing one possible procedure for opening the sealed flacon and/or container of this invention in order to make use of its contents.

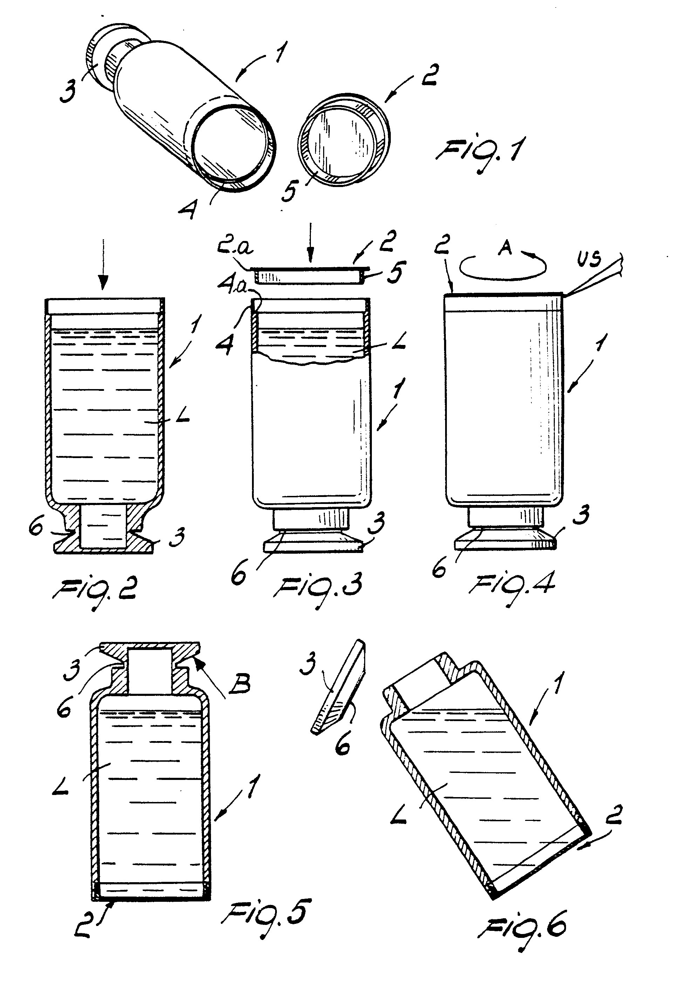

With reference to Figures 1 to 6, during a first step of this method there are formed, separately by injection molding from a suitable plastics material, a flacon body, generally designated with the reference numeral 1, and a cap element, generally indicated at 2.

It may be noted that the flacon body 1, which in this case would be substantially cylindrical, has a closed end 3 and an open end 4, with an inward annular undercut 4a.

The cap element 2 can be associated with the open end 4 in sealed relationship therewith, which cap element, in this embodiment of the invention, comprises a circular base plug portion having a flange 2a and an annular rim 5 which extends from the circular base to a certain height and is integral therewith and is adapted to be received in the annular undercut 4a.

After forming the flacon body 1 and cap 2, the flacon body 1 is arranged substantially vertical, with its closed end downwards, and filled, by means of any conventional filling apparatus, with a medicinal liquid.

This filling step is illustrated diagrammatically in Figure 2, which shows how the liquid L fills the flacon body 1 to a preset level. Of course, the flacon filling operation with the liquid will be carried out, on the cited suitable equipment, for a number of flacons being fed together on a production line.

Then, as shown in Figure 3, the cap 2 is associated with the flacon body 1 by inserting it into the body open end. For this purpose, the dimensions, specifically the radius, of the rim 5 will be such as to allow the introduction of the cap 2 into the body 1. In particular, with the cap 2 inserted, the flacon has the general appearance shown in Figure 4, that is a substantially smooth wall also at the cap area.

After inserting the cap 2 into the flacon body 1, in accordance with this invention, the cap 2 is secured to the body 1 by thermofusion and/or heat-welding the plastic material of the cap and flacon body 1 in mutual contact relationship, by ultrasonic application. In Figure 4, said ultrasonic application is schematically indicated by the arrow as taking place in a counterclockwise direction from the ultrasound application element US and showing that the point where the ultrasonic applicator is located is at the level of the flange 2a of the closure element 2. As visible in Figures 2 and 3 the level of the liquid L within the flacon 1 in the upside down position thereof is at a distance below the undercut 4a.

That step of sealing the cap 2 to the body 1 is a peculiar feature of this invention, in that the ultrasound, in addition to affording an extremely rapid and effective union of the cap 2 and body 1, in no way endangers the sterile condition of both the flacon plastics and product contained therein. Thus, after ultrasonic heat-welding, the resulting flacon will be perfectly tight, allowing no air to seep in nor product to leak out.

To facilitate the opening of the flacon containing a desired medicinal product, it is contemplated that during the injection molding of the flacon body 1, a weakened region be formed in the proximities of the closed end 3 thereof, which is schematically indicated by the arrow B in Figure 5 and effective to make the opening of the flacon easier. In particular, that weakened region may have one of a variety of configurations to meet specific requirements. In the instance of Figure 5, a substantially circumferential weakened region is provided, as indicated at 6, along the truncated cone end portion of this embodiment of the flacon.

Thus, the flacon of this invention can be readily opened, without any special tools and in a rapid manner even by debilitated persons, unlike many prior flacons which are extremely difficult to open because they require removal of metal rings and/or the like.

As for the injection moldable plastics used in the production of these flacons, the Applicant has used, with extremely satisfactory results, the SAN 31 plastic material (which is a plastics of styrene-acrylonitrile), commercially available from Monsanto of U.S.A. In particular, that SAN 31 plastics has been specifically formulated for application in the food product field and for medical applications, and is almost absolutely sterile, and in all cases far more so than the objectionable PVC.

## Claim

A method for manufacturing sealed plastics flacons containing a liquid, which comprises the steps of:

a) forming, by injection molding from said plastics material, a flacon body (1) having a closed end (3) and an open end (4);

b) forming by injection molding from said plastics material a bottom closure element (2) for association in substantially sealed relationship with said open end of said flacon body;

c) introducing into said flacon body, through said open end thereof, a preset amount of said liquid product and

d) permanently associating in sealed relationship and by thermofusion said bottom closure element with said open end of said body, to thus obtain a sealed flacon having a substantially one-piece construction, in a step which comprises keeping said flacon body in a vertical position with said open end (4) thereof at the top while putting said closure element (2) onto said open end of the flacon body thereby causing annular, rim surfaces (5) of said bottom closure element (2) and of the open end (4) of said flacon body to enter in mating engagement with each other characterized in that,

e) the liquid to be filled is a medicinal liquid,

f) the filling of the preset amount of medicinal liquid (L) is such that it assumes a level at a distance from said annular rim surfaces (5),

g) pointing thereafter an ultrasonic applicator (US) onto a point located at said mutually engaging rim surfaces at a distance from the level assumed by said medicinal liquid (L) and

h) providing a relative circular rotation about the axis of said flacon body, between the ultrasonic applicator (US) and the flacon body, thereby progressively sealing by ultrasonically created thermofusion said rim surfaces together.

## Patentanspruch

Verfahren zum Herstellen von abgedichteten Kunststoffbehältern, die eine Flüssigkeit enthalten, umfassend die Stufen:

a) Bildung eines Behälterkorpers (1) mit einem geschlossenen Ende (3) und einem offenen Ende (4) aus dem Kunststoffmaterial durch Spritzguß,

b) Bildung eines Bodenverschlußelements (2) zur im wesentlichen abdichtenden Zuordnung dem offenen Ende des Behälterkorpers aus dem Kunststoffmaterial durch Spritzguß,

c) Einführung einer vorbestimmten Menge an flüssigem Produkt in den Behälterkörper durch dessen offene Ende,

d) permanente und abdichtende Zuordnung des Bodenverschlußelement zum offenen Ende des Behälterkörpers durch Heißverschmelzen, um auf diese Weise einen dicht verschlossenen Behälter von im wesentlichen einstückigem Aufbau zu erhalten, in einer Stufe, in welcher man den Behälterkörper in vertikaler Stellung mit nach oben weisendem offenen Ende (4) hält, während man das Verschlußelement (2) auf das offene Ende des Behälterkörpers aufsetzt und dadurch ringförmige Randflächen (5) des Bodenverschlußelementes (2) und des offenen Endes (4) des Behälterkörpers veranlaßt, miteinander in Paßeingriff zu treten, dadurch gekennzeichnet, daß

e) die einzufüllende Flüssigkeit eine medizinische Flüssigkeit ist,

f) die vorbestimmte Menge der medizinischen Flüssigkeit (L) derart eingefüllt wird, daß sie ein zu den ringförmigen Randflächen (5) im Abstand liegendes Niveau einnimmt,

g) sodann ein Ultraschallgenerator (US) an eine Stelle, die an den miteinander eingreifenden Randflächen in einem Abstand von dem Niveau der medizinischen Flüssigkeit (L) liegt, gerichtet wird und

h) eine kreisförmige Relativbewegung um die Achse des Behälterkörpers zwischen dem Ultraschallgenerator (US) und dem Behälterkörper durchgeführt wird, um dabei fortschreitend durch die durch Ultraschall verursachte Heißverschmelzung die Randflächen miteinander zu verschweißen.

## Revendication

Procédé pour la fabrication de récipients étanches en matière plastique, propre à contenir un liquide, du genre consistant à:

a) façonner, en moulant par injection de la matière plastique, le corps d'un flacon (1) pourvu d'une extrémité fermée (3) et d'une ouverte (4);

b) façonner, en moulant par injection de la matière plastique, le fond d'un élément de fermeture (2), destiné à s'associer de manière substantiellement hermétique avec ladite extrémité ouverte du corps du flacon;

c) introduire dans le corps du flaçon, par son extrémité ouverte, une quantité prédéterminée dudit liquide, et

d) associer en permanence de manière hermétique par thermo-fusion, ledit fond de l'élément de fermeture avec ladite ouverture du corps, pour ainsi obtenir un flacon fermé monolithique, lors d'une étape consistant à conserver ledit corps du flacon dans une position verticale, ladite extrémité ouverte (4) de ce dernier étant située vers le haut, tandis que l'on présente ledit élément de fermeture (2) sur ladite extrémité ouverte du corps du flacon, provoquant ainsi la coopération par contact des surfaces du cordon annulaire (5) du fond de l'élément de fermeture (2) et de l'extrémité ouverte (4) du corps du flacon, caractérisé en ce que,

e) le liquide de remplissage est un liquide médicinal;

f) le remplissage de la quantité prédéterminée de liquide médicinal (L) est tel qu'il atteint un niveau situé à une certain distance desdites surfaces du cordon annulaire (5);

g) l'on présente ensuite un applicateur à ultra-sons (US) sur un point situé à une certaine distance du niveau présumé du liquide médicinale (L) et en un point situé en correspondance avec les surfaces de contact du cordon,

h) l'on provoque une rotation relative entre l'applicateur à ultra-sons et le corps du flacon par rapport à l'axe géométrique de ce dernier, de manière à sceller ensemble de manière progressive par thermo-fusion créée au moyen d'ultra-sons, les surfaces du cordon.

0 076 418

Fig.1

Fig.2

Fig.3

Fig.4

Fig.5

Fig.6